# EUROPEAN PATENT APPLICATION

(11) **EP 2 287 797 A1**
(43) Date of publication of application: **23.02.2011**
(21) Application number: 10173424.2
(22) Date of filing: 19.08.2010
(51) Int. Cl.: G06Q 30/00

(54) **Method and apparatus for providing/receiving mobile digital advertisement service**

(30) Priority: 20.08.2009 KR 20090077323
(71) Applicant: Electronics and Telecommunications Research Institute, Daejeon 305-350 (KR)
(72) Inventor: Yoon, Changwoo, Daejeon 305-707 (KR); Lee, Ho-Yeon, Gyeonggi-do 411-320 (KR); Kim, Yu-Doo, Chungcheongnam-do 330-743 (KR); Lee, Hyun-Woo, Daejeon 305-720 (KR); Ryu, Won, Daejeon 305-806 (KR)
(74) Representative: Betten & Resch

(57) **Abstract**

The present invention relates to a method and apparatus for receiving/providing mobile digital advertisement service. The mobile digital advertisement service receiving method includes receiving a connection guide message from an access point installed at a first store, establishing connection to the access point by transmitting a connection acceptance message in response to the received connection guide message, and receiving the advertisement contents from an advertisement managing server connected to the access point after establishing connection to the access point. The connection guide message is a message for inquiring whether to receive the advertisement contents or not.

## Description

### CROSS-REFERENCE(S) TO RELATED APPLICATIONS

The present application claims priority of Korean Patent Application No. 10-2009-0077323, filed on August 20, 2009, which is incorporated herein by reference in its entirety.

### BACKGROUND OF THE INVENTION

### Field of the Invention

Exemplary embodiments of the present invention relate to a method and apparatus for providing/receiving a mobile digital advertisement service.

### Description of Related Art

A typical digital sign is an electronic display for advertising or providing information to the public. Such a typical digital sign is installed at a predetermined place such as a store and a public space. A manager of the digital sign playbacks predetermined contents such as moving pictures, images, texts, and flash videos according to a predetermined schedule. Since the typical digital sign is installed at a limited space such as a store or a public space, the typical digital sign provides advertisements limited to unspecified individuals.

Lately, many studies have been actively made to provide advertisement contents to a mobile terminal due to the vitalization of a mobile market. A typical advertisement system provides advertisements through access points. Accordingly, a mobile terminal is required to search an access point and establish connection to the access point. Due to such a requirement, an advertisement contents provider has been limitedly provide advertisement contents only to users of mobile terminals connected to an access point. Further, the typical advertisement service uniformly provides the same pre-stored advertisement contents. Accordingly, it is impossible to provide a user-specified advertisement service.

That is, the typical advertisement service could not effectively provide advertisement contents to users because the typical advertisement service could not dynamically response various demands of mobile terminal users.

### SUMMARY OF THE INVENTION

An embodiment of the present invention is directed to a mobile digital advertisement service providing/receiving method and apparatus for providing a mobile digital advertisement service according to an acceptance of a mobile terminal user.

Another embodiment of the present invention is directed to a mobile digital advertisement service providing/receiving method and apparatus for providing user-specified advertisement contents through advertisement contents search.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an embodiment of the present invention, a mobile digital advertisement service receiving method for receiving advertisement contents at a mobile terminal from an advertisement managing server using an access point includes receiving a connection guide message from the access point installed at a first store, establishing connection to the access point by transmitting a connection acceptance message in response to the received connection guide message, and receiving the advertisement contents from the advertisement managing server connected to the access point after establishing connection to the access point, wherein the connection guide message is an inquiry message for inquiring whether to receive the advertisement contents or not.

In accordance with an embodiment of the present invention, a digital mobile advertisement service providing method for providing advertisement contents to a mobile terminal from an advertisement managing server using an access point installed at a first store and connected to the advertisement managing server includes receiving a request message for transmitting predetermined advertisement contents from the access point connected to the mobile terminal, and transmitting the predetermined advertisement contents to the mobile terminal after receiving the request message, wherein the access point transmits a connection guide message to the mobile terminal that enters into a communication range of the access point and establishes connection to the mobile terminal after receiving a connection acceptance message from the mobile terminal in response to the connection guide message, and wherein the connection guide message is an inquiry message for inquiring whether to receive the predetermined advertisement contents or not.

In accordance with an embodiment of the present invention, a mobile digital advertisement service receiving apparatus for receiving advertisement contents from an advertisement managing server using an access point where the access point is installed at a first store and the advertisement managing server is connected to the access point includes a transceiver configured to communicate with the access point to establish connection to the access point, and a controller configured to control the transceiver to establish connection to the access point and to receive the advertisement contents from the advertisement managing server, wherein the transceiver receives a connection guide message from the access point and establishes connection to the access point by transmitting a connection acceptance message in response to the connection guide message, and wherein the connection guide message is an inquiry message for inquiring whether to receive the advertisement contents or not.

In accordance with an embodiment of the present invention, a mobile digital advertisement service providing apparatus for providing advertisement contents to a mobile terminal using an access point installed at a first store by being connected to the access point includes an advertisement storing unit configured to store advertisement contents, and an advertisement transmitter configured to receive a request message for transmitting predetermined advertisement contents from the access point connected to the mobile terminal, extract the predetermined advertisement contents from the advertisement storing unit, and transmit the predetermined advertisement contents to the mobile terminal, wherein the access point transmits a connection guide message to the mobile terminal that enters into a communication range of the access point and establishes connection to the mobile terminal after receiving a connection acceptance message from the mobile terminal in response to the connection guide message, and wherein the connection guide message is an inquiry message inquiring whether to receive advertisement contents or not.

### BRIEF DESCRIPTION OF THE DRAWINGS

Fig. 1 is a block diagram illustrating a mobile digital advertisement system in accordance with an embodiment of the present invention.

Fig. 2 is a flowchart showing a mobile digital advertisement service providing method in accordance with an embodiment of the present invention.

Fig. 3 is a diagram illustrating a method for joining to a service ring of a store at a mobile terminal in accordance with an embodiment of the present invention.

Fig. 4 is a diagram illustrating a method for searching advertisement contents in accordance with an embodiment of the present invention.

Fig. 5 is a diagram illustrating a method for establishing connection between an access point and a mobile terminal in accordance with an embodiment of the present invention.

Fig. 6 is a diagram illustrating a method for receiving advertisement contents in accordance with an embodiment of the present invention.

Fig. 7 is a diagram illustrating a method for searching advertisement contents in accordance with an embodiment of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention. The drawings are not necessarily to scale and in some instances, proportions may have been exaggerated in order to clearly illustrate features of the embodiments.

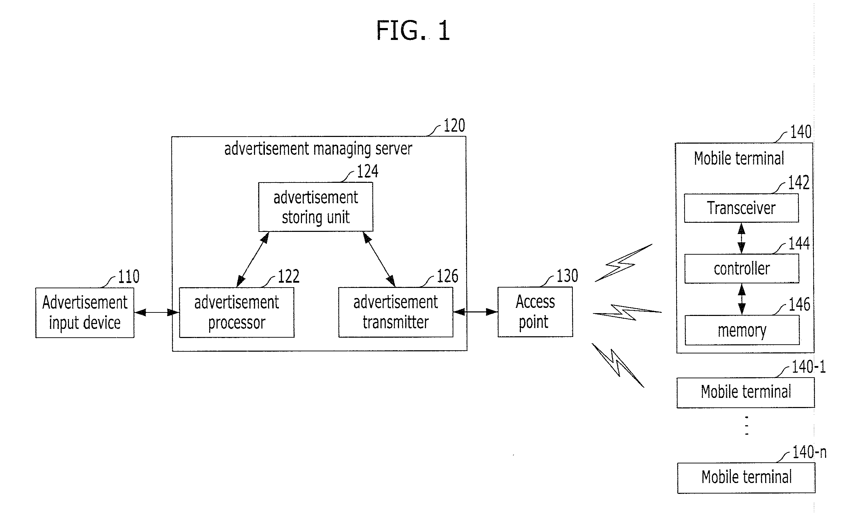

Fig. 1 is a block diagram illustrating a configuration of a mobile digital advertisement system in accordance with an embodiment of the present invention.

Referring to Fig. 1, the mobile digital advertisement system in accordance with an embodiment of the present invention includes an advertisement managing server 120, an access point (AP) 130, and a plurality of mobile terminals 140, 140-1, ..., 140-n. The access point 130 is installed at each store and is connected to the advertisement managing server 120. The advertisement managing server 120 may be connected to the access point 130 by being installed at each store or through a wired/wireless network. The plurality of mobile terminals may be connected to the access point 130. The configuration of the mobile digital advertisement system in accordance with an embodiment of the present invention will be described in detail in later.

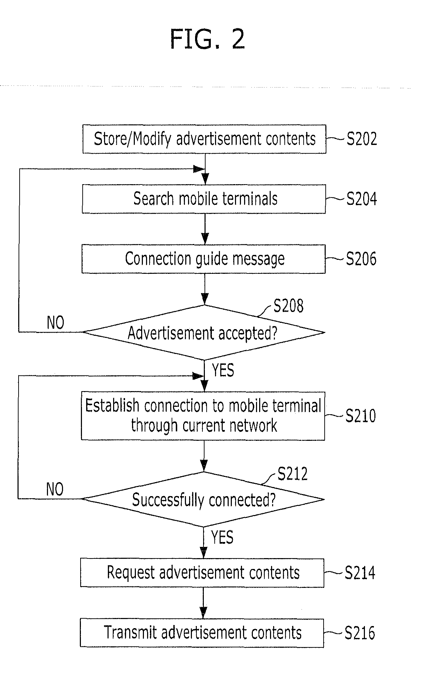

Referring to Figs. 1 and 2, a method for providing a mobile digital advertisement service in accordance with an embodiment of the present invention will be described.

At step S204, the access point 130 searches unconnected mobile terminals among mobile terminals around a store with the access point 130 installed. For instance, the access point 130 may recognize unconnected mobile terminals among mobile terminals located in a communication range of the access point by sensing wireless signals in air.

At step S206, the access point 130 transmits a connection guide message to the unconnected mobile terminal after detecting the unconnected mobile terminal. The connection guide message is a message that guides a mobile terminal to access the access point 130. For example, the connection guide message may be a message inquiring a mobile terminal whether to receive advertisements transmitted through the access point 130.

When the unconnected mobile terminal receives the connection guide message and accepts connection to the access point 130 at the step S208, the unconnected mobile terminal and the access point 130 perform a connection establishment process at step S210. When the searched unconnected mobile terminal does not accept connection to the access point 130 at the step S208, the access point 130 searches another unconnected mobile terminal in the communication range of the store at step S204.

After the searched unconnected mobile terminal is successfully connected to the access point 130 at step S212, the access point 130 requests advertisement contents from the advertisement managing server 120 at step S214. Then, the advertisement managing server 120 transmits the requested advertisement contents to the mobile terminal at step S216. If the searched mobile terminal is not successfully connected to the access point 130 at step S121, the step S210 is performed again.

In the step S214 for requesting advertisement contents and the step S216 for transmitting the advertisement contents, the access point 130 informs the advertisement managing server 120 that the searched mobile terminal is successfully connected to the access point 130 in order to enable the advertisement managing server 120 to transmit predetermined advertisements or information related to a corresponding store to the searched mobile terminal. The searched mobile terminal may request searching predetermined advertisement contents and the advertisement managing server 120 may transmit the predetermined advertisement contents to the searched mobile terminal.

In another embodiment of the present invention, the mobile digital advertisement system may further include an advertisement input device 110. The advertisement input device 110 and the advertisement managing server 120 may be connected to each other through a wired/wireless network. An advertisement provider may store advertisement contents in the advertisement managing server 120 or modify the stored advertisement contents at step S202. The step S202 may be performed prior to the step S204 as shown in Fig. 2. Alternatively, the step S202 may be performed independently from the steps S204 to S216 when it is necessary to store new advertisement contents or to modify stored advertisement contents.

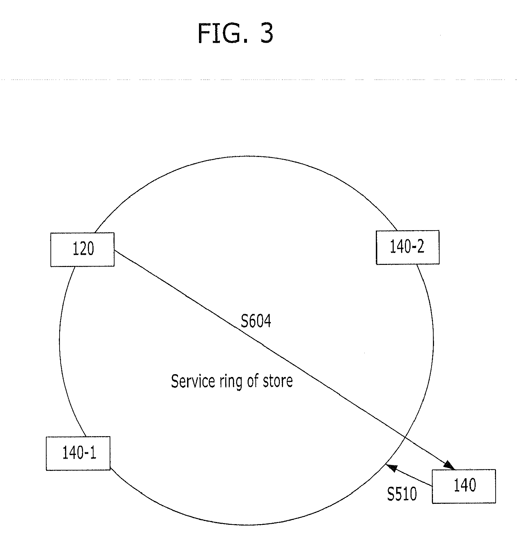

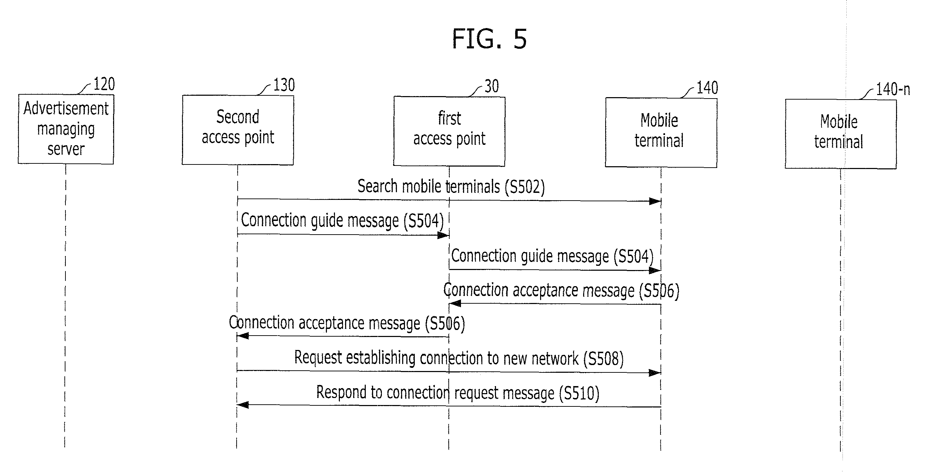

Hereinafter, a method for searching a new mobile terminal and establishing connection to the new mobile terminal at an access point 130 in accordance with an embodiment of the present invention will be described with reference to Figs. 3 and 5.

As described above, the access point 130 is installed at a store of Fig. 3 and the advertisement managing server 120 is connected to the access point 130. Although it is not shown in Fig. 3, the access point 130 may be installed in consideration of a geographical position of a corresponding store or a communication range of the access point 130 that the access point 130 can recognize mobile terminals. For example, the geographical position may be a relation between neighbor stores or a moving direction of a mobile terminal user. The access point 130 may be a wireless LAN, a Femto cell, a WiFi based IPTV set-top box (STB).

At step S502, the access point 130 searches unconnected mobile terminals among mobile terminals in a communication range of a store of Fig. 3. When a new mobile terminal 140 previously connected to another access point enters into a communication range of an access point installed at a store of Fig. 3, the access point 130 can recognize the new mobile terminal 140. For instance, as shown in Fig. 5, when a new mobile terminal 140 previously connected to a first access point 30 enters into a communication range of a second access point 130, the second access point 130 recognizes the new mobile terminal 140.

After recognizing the mobile terminal 140, the second access point 130 transmits a connection guide message to the mobile terminal 140 through the first access point 30 at step S504. For example, the second access point 130 senses all wireless signals in air and recognizes a MAC address of the new mobile terminal 140. The second access point 130 extracts a unique address such as an IP address of the new mobile terminal 140 using the recognized MAC address. A connection guide message is transmitted through the first access point 30 connected to the new mobile terminal 140 using the extracted unique address. As described above, the connection guide message is a message inquiring the new mobile terminal whether to accept receiving corresponding advertisement or information. For example, the second access point 130 may transmit the connection guide message with information about a store or short advertisements of the store. That is, the connection guide message may include guide information about advertisements in the advertisement managing server 120.

After receiving the connection guide message, the new mobile terminal 140 determines whether to accept connection to the second access point 130. For example, the new mobile terminal 140 may receive information about whether to accept connection to the second access point 130 or not from a user. In this case, a user of the mobile terminal 140 may not be repulsed by advertisement contents since connection is established based on user selection rather than forcedly establishing connection. Further, the effect of advertisement can be improved because the advertisement contents are provided to only mobile terminals accepting the reception of advertisements. Since the access point is connected to the Internet, a free Internet service may be offered to a user of a mobile terminal. In this case, a user may easily accept connection to the access point in order to receive the free Internet service. Predetermined advertisements can be provided through the free Internet connection service. When the new mobile terminal 140 wants to receive advertisements through connection to the second access point 130, the new mobile terminal 140 transmits a connection acceptance message for accepting connection to the second access point 130 to the second access point 130 through the first access point 30 at step S506.

After the second access point 130 receives the connection acceptance message, the second access point 130 transmits a connection request message to the mobile terminal 140 at step S508. The new mobile terminal 140 response to the connection request message at step S510. Then, a handover process is performed to release the connection between the new mobile terminal 140 and the first access point 30 and to establish connection between the new mobile terminal 140 and the second access point 140.

As described above, more than one mobile terminal can be connected to the access point 130. A closed user group (CUG) denotes a group including the advertisement managing server 120 connected to the access point 130 and at least one mobile terminal. In one embodiment, the CUG may be formed in a unit of store. In the CUG, the advertisement managing server 120 and each mobile terminal may be referred as a node. The nodes of the CUG may form various networks to perform peer-to-peer (P2P) communication with each other based on diverse algorithms for mobile digital advertisement service. In one embodiment, each node connected to the access point 130 installed at a store of Fig. 3 may form a Chord Ring according to a Chord Ring algorithm of P2P as shown in Fig. 3. Since the Chord Ring algorithm is well known to one of ordinary skill in the art, the detail description thereof is omitted herein.

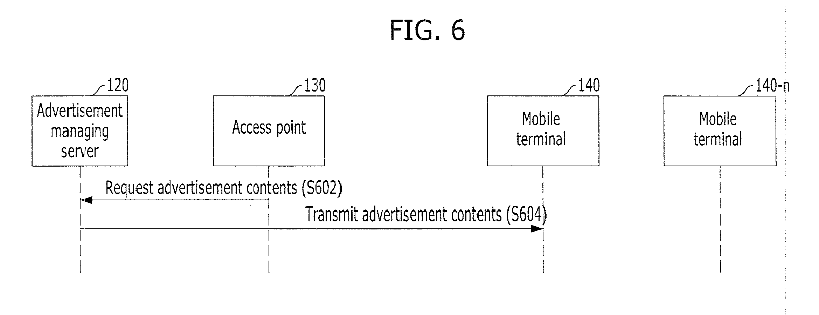

After the access point 130 is successfully connected to the new mobile terminal 140, the access point 130 requests the advertisement managing server 130 to transmit corresponding advertisement contents at step S602 as shown in Fig. 6. After the advertisement managing server 120 receives the request message, the advertisement managing server 120 transmits corresponding advertisement contents to the mobile terminal 140 at step S604.

As shown in Fig. 3, the advertisement managing server 120 and two mobile terminals 140-1 and 140-2 form a service ring of a store. The new mobile terminal 140 joins to the service ring of Fig. 3 by establishing connection to the access point 130 at step S510. Then, the advertisement managing server 120 transmits predetermined advertisement contents to the mobile terminal 140 newly joined to the service ring of store at step S604.

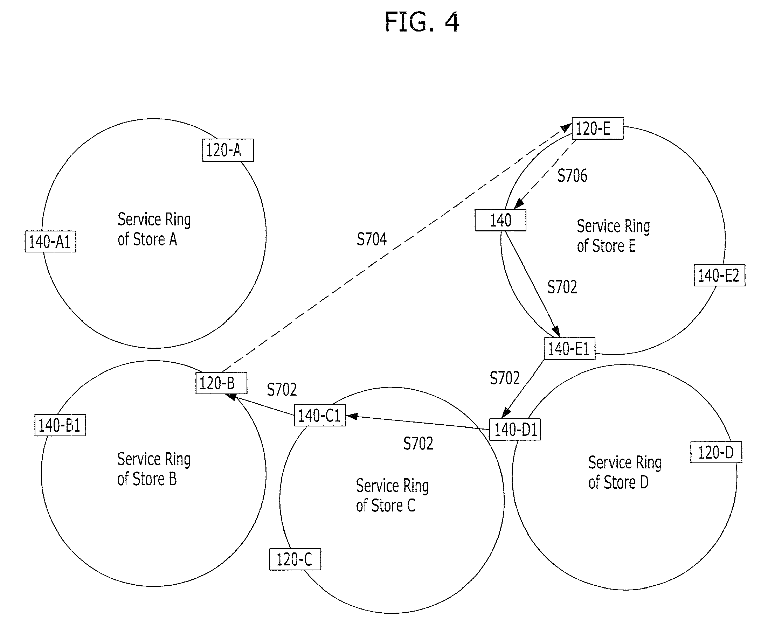

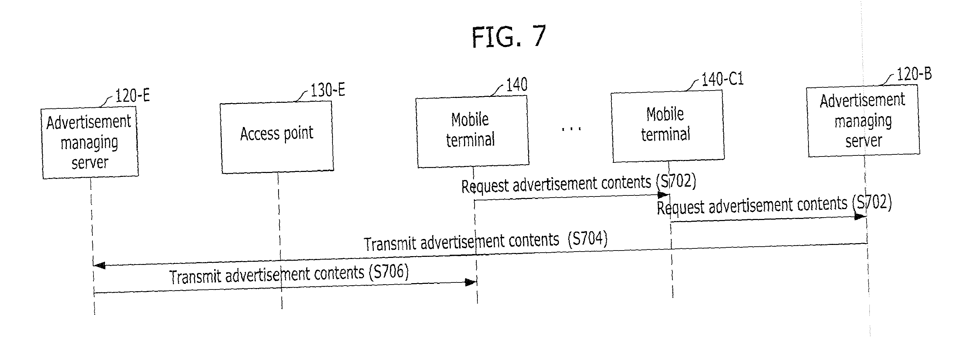

Hereinafter, a method for receiving desired information by requesting the desired information at a mobile terminal 140 in accordance with an embodiment of the present invention will be described with reference to Figs. 4 and 7.

At step S702, a mobile terminal 140 sends an inquiry message to a service ring of a store E for searching predetermined information. For example, the predetermined information may be advertisement contents related to a store or a product. Sending the inquiry message may be referred to propagating corresponding inquiry throughout nodes joined to a corresponding service ring according to a predetermined algorithm.

In case of a Chord Ring algorithm, each node joined to a service ring maintains information about a successor node and a predecessor node. The mobile terminal 140 transmits a predetermined inquiry message to the successor node such as a mobile terminal 140-E1. When the mobile terminal 140-E1 does not have requested information, the mobile terminal 140-E1 transmits the inquiry message to a successor node thereof such as a mobile terminal 140-E2. When the mobile terminal 140-E2 also does not have the requested information, the mobile terminal 140-E2 transmits the inquiry message again to a successor node thereof such as an advertisement managing server 120-E. As described above, the inquiry message is propagated throughout the nodes joined to the service ring, and the mobile terminal 140 is aware of that the requested information is in the service ring. Alternatively, the mobile terminal 140 may directly inquire of the advertisement managing server 120-E about desired information.

As described above, a mobile terminal may search desired information in a corresponding service ring by propagating an inquiry message throughout nodes of the corresponding service ring according to various algorithms. When one of nodes in a corresponding service ring has the requested information, the mobile terminal 140 is connected to the node having the requested information and receives the requested information from the node. Here, the node having the requested information may be an advertisement managing server or another mobile terminal. That is, the mobile terminal 140 can receive the requested information from a node having the requested information without passing through other nodes. For example, when the advertisement managing server 120-E has requested information, the advertisement managing server 120-E may transmit the requested information directly to the mobile terminal without passing through other nodes.

When the service ring of a store E does not have requested information, the inquiry message is transmitted to a neighbor service ring such as a service ring of a store D at step S702. Various algorithms may be used to transmit the inquiry message to the neighbor service ring. For example, when the service ring of the store E does not have the requested information, one of the mobile terminal 140 that initially requests the information, the advertisement managing server 120-E and a node that receives the inquiry message last in the store E may request a mobile terminal 140-E1 to transmit the inquiry message to the store D. Since the mobile terminal 140-E1 moved from the store D to the store E, the mobile terminal 140-E1 may have information about nodes of the store D. For example, the mobile terminal 140-E1 may transmit the inquiry message to its successor node in a service ring of the store D, for example, a mobile terminal 140-D1. As described above, the inquiry message can be propagated throughout the nodes of the service ring of the store D from the mobile node 140-D1, and it is possible to determine whether the service ring of the store D has the requested information or not.

In the same way as the above mentioned method, when the service ring of the store D does not have the requested information, the mobile terminal 140-D1 transmits the inquiry message to a node in a service ring of a store C, such as a mobile terminal 140-C1 at step S702. When the service ring of the store C does not have the requested information, the mobile terminal 140-C1 transmits the inquiry message to a node in a service ring of a store B, such as an advertisement managing server 120-B at step S702. When the advertisement managing server 120-B of the store B has the requested information, the advertisement managing server 120-B of the store B transmits the requested information to the advertisement managing server 120-E of the store E where the mobile terminal 140 is joined to at step S704. Herein, the mobile terminal 140 is an initial node that initially requests the information. At step S706, the advertisement managing server 120-E of the store E transmits the requested information to the mobile terminal 140. When one of mobile terminals in the store B has the requested information, the mobile terminal transmits the requested information to the advertisement managing server 120-E of the store E through the advertisement managing server 120-B of the store B and the advertisement managing server 120-E of the store E transmits the requested information to the mobile terminal 140.

As describe above, the mobile terminal can search and receive advertisement contents not only in a joined service ring but also in neighbor service rings. That is, an advertising area can be expanded by effectively passing advertisements through neighbor CUGs.

Hereinafter, the mobile digital advertisement system in accordance with an embodiment of the present invention will be described in detail with reference to Fig. 1. Since a mobile digital advertisement service providing/receiving method performed in the mobile digital advertisement system in accordance with an embodiment of the present invention is identical to that described above, the detail description thereof is omitted herein.

The mobile digital advertisement system in accordance with an embodiment of the present invention includes an advertisement managing server 120, an access point 130 and mobile terminals 140, 140-1, ..., 140-n.

The advertisement managing server 120 includes an advertisement storing unit 124 and an advertisement transmitter 126.

The advertisement storing unit 124 stores advertisement contents. The advertisement contents may include information about a store, information about a product, information about money-saving coupons, or information about discount event. The advertisement contents may be advertisement specified to each store.

The advertisement transmitter 126 extracts the predetermined advertisement contents from the advertisement storing unit 124 and transmits the extracted advertisement contents to a mobile terminal. The advertisement transmitter 126 may receive a message informing that a mobile terminal 140 is newly joined to a service ring. For example, the advertisement transmitter 126 receives a message of requesting predetermined advertisement contents from the access point 130 connected to the mobile terminal 140. In this case, the advertisement transmitter 126 extracts the requested advertisement contents from the advertisement storing unit 124 and transmits the extracted advertisement contents to the mobile terminal 140. When the mobile terminal 140 requests searching advertisement contents, the advertisement transmitter 126 receives an inquiry message and determines whether or not the advertisement storing unit 124 has the requested advertisement contents. When the advertisement storing unit 124 has the requested advertisement contents, the advertisement transmitter 126 transmits the requested advertisement contents to the mobile terminal 140. If not, the advertisement transmitter 126 transmits the inquiry message according to a predetermined algorithm.

The advertisement managing server 120 may further include an advertisement processor 122. The advertisement processor 122 receives advertisement contents from an advertisement input unit 110 and stores the received advertisement contents in the advertisement storing unit 124. For example, the advertisement processor 122 processes the received advertisement contents to be matched with data stored in the advertisement storing unit 124 and stores the processed advertisement contents in the advertisement storing unit 124. The advertisement process 122 may perform parsing or transformation for processing the received advertisement contents. Further, the advertisement processor 122 extracts the advertisement contents previously stored in the advertisement storing unit 124 and transmits the extracted advertisement contents to the advertisement input unit 110.

The access point 130 establishes a connection to a new mobile terminal as described above. Further, a peer-to-peer communication (P2P) between nodes may be performed through the access point 130.

The mobile terminal 140, 140-1, ..., 140-n may include a transceiver 142 and a controller 144.

The transceiver 142 performs communication for establishing connection to the access point 130 and receives advertisement contents. The transceiver 142 also performs P2P communication to other nodes according to a predetermined algorithm for searching predetermined advertisement contents.

The controller 144 controls the transceiver 142 to receive advertisement contents. Further, the controller 144 performs establishing connection to the access point 130 or controls the transceiver 142 to search predetermined advertisement contents according to a predetermined algorithm.

The mobile terminal 140, 140-1, ..., 140-n may further include a memory 146. The memory 146 stores information required to search predetermined advertisement contents according to a predetermined algorithm or establish connection to the access point 130. The memory 146 may store received advertisement contents.

The mobile digital advertisement system may further include an advertisement input unit 110. A user such as an advertisement provider can produce advertisement contents using the advertisement input unit 110. Further, the user may modify advertisement contents previously stored in the advertisement managing server 120. The advertisement input unit 110 receives advertisement contents from a user and transmits the received advertisement contents to the advertisement managing server 120. The advertisement contents transmitted from the advertisement input unit 110 are stored in the advertisement storing unit 124 through the advertisement processor 122 of the advertisement managing server 120. For example, the advertisement input unit 110 and the advertisement processor 122 may be configured as web-based units. In this case, the user may produce or modify advertisement contents through a webbrowser of the advertisement input device 110. Further, the advertisement processor 122 may be a web-server. By configuring the advertisement input unit 110 and the advertisement processor 122 as a web-based unit, the advertisement contents can be easily stored or modified at the advertisement storing unit 124 of the advertisement managing server 120.

As described above, the method and apparatus for providing/receiving mobile digital advertisement service in accordance with an embodiment of the present invention can provide a mobile digital advertisement service according to whether a user accepts receiving advertisement contents or not.

Further, the method and apparatus for providing/receiving mobile digital advertisement service in accordance with an embodiment of the present invention can provide user specified advertisement contents.

The above-described methods can also be embodied as computer programs. Codes and code segments constituting the programs may be easily construed by computer programmers skilled in the art to which the invention pertains. Furthermore, the created programs may be stored in computer-readable recording media or data storage media and may be read out and executed by the computers. Examples of the computer-readable recording media include any computer-readable recoding media, e.g., intangible media such as carrier waves, as well as tangible media such as CD or DVD.

While the present invention has been described with respect to the specific embodiments, it will be apparent to those skilled in the art that various changes and modifications may be made without departing from the spirit and scope of the invention as defined in the following claims.

## Claims

1. A mobile digital advertisement service receiving method for receiving advertisement contents at a mobile terminal from an advertisement managing server using an access point where the access point is installed at a first store and the advertisement managing server is connected to the access point, the method comprising:
receiving a connection guide message from the access point;
establishing connection to the access point by transmitting a connection acceptance message in response to the received connection guide message; and
receiving the advertisement contents from the advertisement managing server after establishing connection to the access point,
wherein the connection guide message is a message for inquiring whether to receive the advertisement contents or not.

2. The mobile digital advertisement service receiving method of claim 1, wherein the connection acceptance message is inputted from a user.

3. The mobile digital advertisement service receiving method of claim 1 or 2 further comprising:
requesting at least one node of the first store to search predetermined advertisement contents; and
receiving the predetermined advertisement contents from a node having the predetermined advertisement contents,
wherein the predetermined advertisement contents are searched by requesting at least one node of a second store to search the predetermined advertisement contents when no node of the first store has the predetermined advertisement contents where the second store is neighbor to the first store, and requesting at least one node of a third store to search the predetermined advertisement contents when no node of the second store has the predetermined advertisement contents where the third store is neighbor to the second store, and
wherein the node is one of an advertisement managing server and a mobile terminal, which are connected to an access point installed at each store.

4. The mobile digital advertisement service receiving method of claim 3, wherein the predetermined advertisement contents are searched by propagating an inquiry message for requesting searching the predetermined digital contents throughout nodes according to a Chord Ring algorithm,
wherein the inquiry message is propagated through a node of the first store, which has information about at least one node of the second store when requesting searching the predetermined advertisement contents to at least one node of the second store, and
wherein the inquiry message is propagated through a node of the second store, which has information about at least one node of the third store when requesting searching the predetermined advertisement contents to at least one node of the third store.

5. The mobile digital advertisement service receiving method of claim 3 or 4, wherein said receiving the predetermined advertisement contents from a node includes:
receiving the predetermined advertisement contents directly from a node having the predetermined advertisement contents without passing through another node when the node having the predetermined advertisement contents is belonged to the first store; and
receiving the predetermined advertisement contents through an advertisement managing server of a store including a node having the predetermined advertisement contents and an advertisement managing server of the first store when the node having the predetermined advertisement contents is not belonged to the first store.

6. A digital mobile advertisement service providing method for providing advertisement contents to a mobile terminal from an advertisement managing server using an access point, where the access point is installed at a first store and the advertisement managing server is connected to the access point, the digital mobile advertisement service providing method comprising:
receiving a request message for transmitting the advertisement contents from the access point connected to the mobile terminal; and
transmitting the advertisement contents to the mobile terminal after receiving the request message,
wherein the access point transmits a connection guide message to the mobile terminal that enters into a communication range of the access point and establishes connection to the mobile terminal after receiving a connection acceptance message from the mobile terminal in response to the connection guide message, and
wherein the connection guide message is a message for inquiring whether to receive the advertisement contents or not.

7. The mobile digital advertisement service providing method of claim 6 further comprising:
receiving a request for searching predetermined advertisement contents;
in case that the predetermined advertisement contents is available, transmitting the predetermined advertisement contents to an initial mobile terminal that initially requests the predetermined advertisement contents when the initial mobile terminal is belonged to the first store, or transmitting the predetermined advertisement contents through an advertisement managing server of a store including the initial mobile terminal when the initial mobile terminal is not belonged to the first store; and
in case that the predetermined advertisement contents is not available, requesting searching the predetermined advertisement contents to at least one node of a second store through a node of the first store where the second store is neighbor to the first store and the node of the first store has information about at least one node of the second store,
wherein the node is one of an advertisement managing server and a mobile terminal, which are connected to an access point installed at each store.

8. The mobile digital advertisement service providing method of claim 7, wherein said receiving a request for searching predetermined advertisement contents is receiving an inquiry message for requesting searching the predetermined advertisement contents according to a Chord Ring algorithm.

9. A mobile digital advertisement service receiving apparatus for receiving advertisement contents from an advertisement managing server using an access point where the access point is installed at a first store and the advertisement managing server is connected to the access point, the mobile digital advertisement service receiving apparatus comprising:
a transceiver configured to communicate with the access point to establish connection to the access point; and
a controller configured to control the transceiver to establish connection to the access point and to receive the advertisement contents from the advertisement managing server,
wherein the transceiver receives a connection guide message from the access point and establishes connection to the access point by transmitting a connection acceptance message in response to the connection guide message, and
wherein the connection guide message is a message for inquiring whether to receive the advertisement contents or not.

10. The mobile digital advertisement service receiving apparatus of claim 9, wherein the connection acceptance message is inputted from a user.

11. The mobile digital advertisement service receiving apparatus of claim 9 or 10, wherein the transceiver requests at least one of node of the first store to search predetermined advertisement contents and receives the predetermined advertisement contents from a node having the predetermined advertisement contents,
wherein searching the predetermined advertisement contents is requested to at least one node of a second store when no node of the first store has the predetermined advertisement contents where the second store is neighbor to the first store, and searching the predetermined advertisement contents is requested to at least one node of a third store when no node of the second store has the predetermined advertisement contents where the third store is neighbor to the second store, and
wherein the node is one of an advertisement managing server and a mobile terminal, which are connected to each store.

12. The mobile digital advertisement service receiving apparatus of claim 11, wherein searching the predetermined advertisement contents is requested by propagating an inquiry message for requesting searching the predetermined advertisement contents through each node according to a Chord Ring algorithm,
wherein the inquiry message is propagated through a node of the first store, which has information about at least one node of the second store when searching the predetermined advertisement contents is requested to at least one node of the second store, and
wherein the inquiry message is propagated through a node of the second store, which has information about at least one node of the third store when searching the predetermined advertisement contents is requested to at least one node of the third store.

13. The mobile digital advertisement service receiving apparatus of claim 11 or 12, wherein the transceiver receives the predetermined advertisement contents from a node having the predetermined advertisement contents without passing through another node when the node having the predetermined advertisement contents is belonged to the first store, and
wherein the transceiver receives the predetermined advertisement contents from an advertisement managing server of a store including a node having the predetermined advertisement contents and an advertisement managing server of the first store when the node having the predetermined advertisement contents is not belonged to the first store.

14. A mobile digital advertisement service providing apparatus for providing advertisement contents to a mobile terminal using an access point installed at a first store by being connected to the access point, the mobile digital advertisement service providing apparatus comprising:
an advertisement storing unit configured to store the advertisement contents; and
an advertisement transmitter configured to receive a request message for transmitting the advertisement contents from the access point connected to the mobile terminal, extract the advertisement contents from the advertisement storing unit, and transmit the advertisement contents to the mobile terminal,
wherein the access point transmits a connection guide message to the mobile terminal that enters into a communication range of the access point and establishes connection to the mobile terminal after receiving a connection acceptance message from the mobile terminal in response to the connection guide message, and
wherein the connection guide message is a message inquiring whether to receive the advertisement contents or not.

15. The mobile digital advertisement service providing apparatus of claim 14, wherein the advertisement transmitter receives a request of searching predetermined advertisement contents,
wherein in case that the predetermined advertisement contents are available, the advertisement transmitter transmits the predetermined advertisement contents to an initial mobile terminal that initially requests the predetermined advertisement contents when the initial mobile terminal is belonged into the first store or the advertisement transmitter transmits the predetermined advertisement contents to the initial mobile terminal through an advertisement managing server of a store including the initial mobile terminal when the initial mobile terminal is not belonged to the first store,
wherein in case that the predetermined advertisement contents are not available, the advertisement transmitter requests searching the predetermined advertisement contents to at least one node of a second store through a node of the first store, where the second store is neighbor to the first sore and the node of the first store has information about at least one node of the second store, and
wherein the node is one of an advertisement managing server and a mobile terminal, which are connected to an access point installed at each store.
